(19) Europäisches Patentamt
European Patent Office
Office européen des brevets

(11) EP 0 841 346 B1

(12) **FASCICULE DE BREVET EUROPEEN**

(45) Date de publication et mention de la délivrance du brevet:
**29.09.1999 Bulletin 1999/39**

(51) Int Cl.$^6$: **C08F 4/00**

(21) Numéro de dépôt: **97401442.5**

(22) Date de dépôt: **20.06.1997**

(54) **Procédé de (co)polymérisation radicalaire contrôlée de monomères (méth)acryliques, vinyliques, vinylidéniques et diéniques en présence d'un complexe de Rh, Co ou Ir**

Verfahren zur kontrollierten radikalischen (Co)Polymerisation von (Meth)Acrylat, Vinyl, Vinyliden und Dien Monomeren in Anwesenheit einer Rh, Co oder Ir Komplex

Process of controlled radical (co)polymerization of (meth)acrylic, vinylic, vinylidenic and dienic monomers in the presence of a complex of Rh, Co or Ir

(84) Etats contractants désignés:
**BE CH DE ES FR GB IT LI NL SE**

(30) Priorité: **07.11.1996 FR 9613571**

(43) Date de publication de la demande:
**13.05.1998 Bulletin 1998/20**

(73) Titulaire: **ELF ATOCHEM S.A.**
**92800 Puteaux, Hauts-de-Seine (FR)**

(72) Inventeurs:
- **Dubois, Philippe**
**4260 Ciplet (Braives) (BE)**
- **Moineau Georges**
**4031 Angleur (BE)**
- **Teyssie, Philippe**
**4121 Neuville En Condroz (BE)**
- **Jerome, Robert**
**4180 Tilff (BE)**
- **Senninger, Thierry**
**57700 Hayange (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**EP-A- 0 072 066** **EP-A- 0 265 091**
**CS-B- 162 162** **US-A- 4 145 486**

- **TAKAYUKI OTSU: "NEW INITIATOR SYSTEMS FOR RADICAL POLYMERIZATION OF VINYL MONOMERS" JOURNAL OF POLYMER SCIENCE, PART B, POLYMER LETTERS, vol. 5, no. 8, août 1967, page 697-701 XP000202806**

EP 0 841 346 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

La présente invention est relative à un procédé de polymérisation ou copolymérisation radicalaire contrôlée de monomères (méth)acryliques et/ou vinyliques et/ou vinylidéniques (par exemple, vinylaromatiques) et/ou diéniques.

La polymérisation radicalaire constitue l'un des processus de polymérisation les plus exploités industriellement en raison de la variété des monomères polymérisables (70% des monomères commerciaux), de la facilité de mise en oeuvre et des procédés de synthèse utilisés (émulsion, suspension, masse, solution). Toutefois, il est difficile en polymérisation radicalaire classique de contrôler la dimension des chaînes polymères et la distribution des masses moléculaires. Les polymères ainsi préparés contiennent des chaînes de très grandes et très faibles masses (polydispersité large), ce qui conduit à des matériaux aux propriétés non contrôlées. De plus, l'addition séquencée de monomère conduit à un mélange d'homopolymères.

Les techniques de polymérisation ionique ou coordinative, quant à elles, permettent un contrôle correct du processus, mais les conditions de réaction qu'exigent ces méthodes de polymérisation ne sont pas toujours réalisables à l'échelle industrielle (pureté des monomères et réactifs, atmosphère inerte). De plus, de nombreux monomères ne peuvent être polymérisés par ces techniques.

Bien qu'il existe à ce jour quelques exemples de polymérisation radicalaire contrôlée de monomères (méth) acryliques ou vinylaromatiques, les systèmes en question nécessitent soit des températures de polymérisation élevées comme avec les systèmes CuX/2,2'-bipyridine (X = halogène tel que Cl), l'amorceur étant un halogénure d'alkyle, ou avec $CuX_2$, l'amorceur étant l'azobisisobutyronitrile, soit la présence d'un activateur, de type acide de Lewis, sensible à l'eau (complexe de $RuCl_2(PPh_3)_3$). Or, lorsque la température est élevée, l'autoamorçage thermique se produit, ce qui conduit, notamment, à une diminution du contrôle de la polymérisation.

En outre, pour la polymérisation en émulsion ou en suspension, il est connu que la plupart des procédés sont mis en oeuvre en milieu aqueux et, donc, il est nécessaire de travailler à des températures inférieures à 100°C pour assurer la stabilité de ces émulsions ou suspensions.

La température peut être, certes, abaissée, mais la présence d'acides de Lewis est alors nécessaire et cela implique de travailler en milieu anhydre.

Il est aussi nécessaire que le catalyseur ne soit pas dégradé par l'eau dans les conditions normales de polymérisation.

Le concept utilisé pour contrôler la polymérisation fait appel aux réactions d'oxydo-réduction par transfert d'atomes ou de groupes d'atomes de façon réversible. Le complexe métallique oscille entre deux degrés d'oxydation en permanence au cours de la polymérisation. Ce concept a été largement exploité en chimie organique et a été découvert par Kharasch en 1947 avec l'addition de polyhalogénométhanes sur des oléfines. Le mécanisme peut également faire intervenir des cycles d'additions oxydantes et d'éliminations réductrices. Dans les deux cas, il s'agit d'un processus qui se répète constamment sauf en cas de destruction progressive du catalyseur par des réactions secondaires.

Noriyuki Kameda a beaucoup étudié la polymérisation radicalaire de monomères vinyliques à l'aide de systèmes amorceurs comprenant des métaux du groupe 9 de la classification périodique, et notamment du rhodium ou de l'iridium.

Kameda (*Nippon Kagaku Kaishi* 1983, 8, 1196., *Kobunshi Ronbunshu* 1984, *41,* 679., *Kobunshi Ronbunshu* 1985, *42*, 485.) a étudié le complexe de rhodium $RhH_2(Ph_2NNNPh)(PPh_3)_2$ (RN = 36059-83-3), qui permet de polymériser le méthacrylate de méthyle (MAM), l'acétate de vinyle ou le styrène dans différents solvants (DMSO, benzène ou diméthylformamide). Dans le cas de la polymérisation du MAM, il observe une augmentation linéaire de la masse moyenne avec la conversion, ce qui serait signe d'une polymérisation vivante.

Plus récemment, Kameda (*Nippon Kagaku Kaishi* 1989, *4*, 736. ou *Kobunshi Ronbushu* 1979, 36, 347.) a étudié la polymérisation du MAM amorcée par les systèmes $RhH(CO)(PPh_3)_3$ / polyamine / $CCl_4$ ou $RhH(CO)(PPh_3)_3$ / $CCl_4$. Aucun caractère vivant n'est noté pour ce type de système.

Kameda (*Nippon Kagaku Kaishi* 1977, *8*, 1216., *Nippon Kagaku Kaishi* 1976, *4*, 682., *Nippon Kagaku Kaishi* 1979, *1*, 122.) a également étudié la polymérisation du MAM initiée par le mélange d'un complexe de l'iridium, tel que $IrCl(CO)(PPh_3)_2$ (RN = 14871-47-1), $IrCl(CO)(PPh_3)_3$ (RN = 41114-18-5) ou $Ir(H)(CO)(PPh_3)_3$ (RN = 17250-25-8) et d'un halogénure d'alkyle tel que $CBr_4$, $CCl_4$ ou $CHBr_3$. Bien qu'il ait démontré que l'amorçage de la polymérisation fût radicalaire, il n'a pas noté de caractère vivant pour ce type de système.

Enfin, Kameda a polymérisé des monomères vinyliques avec un amorçage par des initiateurs radicalaires tels que le peroxyde de benzoyle $Bz_2O_2$ (RN = 94-36-0) ou l'hydroperoxyde de tertiobutyle $Bu^tOOH$ (RN = 75-91-2), associés à un complexe du groupe 9, tel que, par exemple, $RhCl(CO)(PPh_3)_2$ ou $IrCl(CO)(PPh_3)_2$. A nouveau aucun caractère vivant n'est mentionné pour ce type de combinaison.

Le but de la présente invention consiste, par conséquent, à remédier aux inconvénients précités et à réaliser des polymérisations radicalaires qui permettent un contrôle identique aux polymérisations ioniques et coordinatives dans des conditions de synthèse acceptables industriellement et qui, par conséquent, permettent de synthétiser des

homopolymères et des copolymères statistiques ou séquencés purs, parfaitement définis, dont la longueur est prédéterminée, lesquels n'ont pu jusque là être synthétisés.

D'une façon générale, le but de l'invention est de présenter un procédé de polymérisation ou copolymérisation radicalaire de monomères (méth)acryliques et/ou vinyliques et/ou diéniques permettant de contrôler la croissance des chaînes de polymères, le processus de polymérisation s'effectuant en masse, solution, émulsion ou suspension jusqu'à ce que la totalité du ou des monomères précédents soit consommée.

Pour cela, il est nécessaire d'éviter ou tout au moins de limiter les réactions de terminaison par recombinaison et dismutation et de favoriser un amorçage rapide de la polymérisation ou copolymérisation.

C'est ainsi qu'un des buts essentiels de l'invention est de proposer des catalyseurs et des amorceurs qui permettent, sans nécessiter une modification appréciable de la technologie classique, d'obtenir, dans des conditions industriellement et économiquement valables, des polymères et copolymères répondant aux exigences commerciales de régiosélectivité, de stéréosélectivité, de contrôle des masses moléculaires et de leurs distributions.

A cet effet, on prévoit, suivant la présente invention, un procédé de polymérisation ou copolymérisation radicalaire contrôlée de monomères (méth)acryliques et/ou vinyliques et/ou diéniques, caractérisé par le fait que l'on polymérise ou copolymérise en masse, solution, émulsion ou suspension, à une température pouvant descendre jusqu'à 0°C, au moins un desdits monomères en présence d'un système d'amorçage comprenant :

- au moins un composé générateur de radicaux non peroxydique ; et
- au moins un catalyseur constitué par un complexe de métal, représenté par la formule suivante (I) :

$$MA_a(L)_n \qquad (I)$$

dans laquelle :

- . M représente Rh, Co ou Ir ;
- . A représente un halogène ou un pseudo-halogène ;
- . les L, identiques ou différents, représentent chacun un ligand, pouvant être un ligand chiral, qui est choisi parmi le cyclooctadiène, PRR'R", P(OR)(OR')(OR"), NRR'R", ORR', SRR', SeRR', AsRR'R", SbRR'R", chaque R, R', R" représentant indépendamment un groupe alkyle en $C_1$-$C_{14}$, éventuellement substitué, ou un groupe aromatique éventuellement substitué,
  au moins deux de ces ligands pouvant être reliés entre eux par un ou plusieurs radicaux bivalents ;
- . a est un entier tel que $1 \leq a \leq 3$ ;
- . n est un entier tel que $1 \leq n \leq 5$,

et en l'absence d'activateur.

M représente de préférence Rh.

A représente un halogène choisi parmi Cl, Br, F et I, ou un pseudo-halogénure choisi notamment parmi CN, NCS, $NO_2$, $NO_3$, $N_3$, $OCOCF_3$, $OCOCH_3$ et $BF_4$.

Les radicaux bivalents qui peuvent relier certains ligands L peuvent être, par exemple, un radical alkylène, tel que les radicaux méthylène ($-CH_2-$), éthylène ($-CH_2CH_2-$), triméthylène ($-CH_2CH_2CH_2-$), lesquels peuvent eux-mêmes être substitués par exemple par un groupe alkyle en $C_1$-$C_{14}$ ou aryle.

En particulier, les L peuvent représenter chacun une monophosphine PRR'R", R, R' et R" représentant chacun indépendamment un groupe alkyle en $C_1$-$C_{14}$ pouvant être substitué par $SO_3^-$, COOH, alcoxy, alkyl-S-, ou un groupe aromatique pouvant être substitué par au moins un substituant choisi notamment parmi halogène, tel que Cl, Br, F, alkyle, $CF_3$, alcoxy, $NO_2$, $SO_3^-$, au moins deux de ces ligands pouvant être reliés pour former une polyphosphine, laquelle peut contenir au moins un hétéroatome, tel que N, P, S et O.

Comme exemples de groupes alkyle éventuellement substitués entrant dans la définition de R, R', R", on peut citer méthyle, éthyle, n-propyle, n-butyle, $NCCH_2CH_2-$, et comme exemples de groupes aromatiques, éventuellement substitués, on peut citer phényle, 1-naphtyle, p-$FC_6H_4$, m-$ClC_6H_4$, o-$CH_3OC_6H_4$, p-$CF_3C_6H_4$, 2,4,6-triméthoxyphényle, $C_6F_5$, o-$CH_3C_6H_4$, p-$CH_3C_6H_4$, m-$CH_3C_6H_4$.

On peut également citer les monophosphines porteuses de groupements destinés à les rendre solubles, telles que le triphénylphosphine monosulfonate de sodium (TPPMS) ou le triphénylphosphine trisulfonate de sodium (TPPTS) :

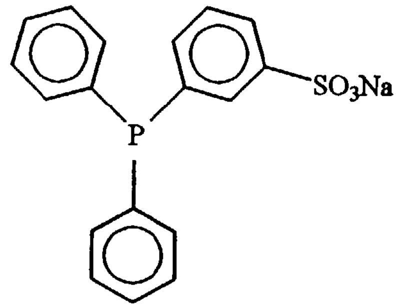

TPPMS

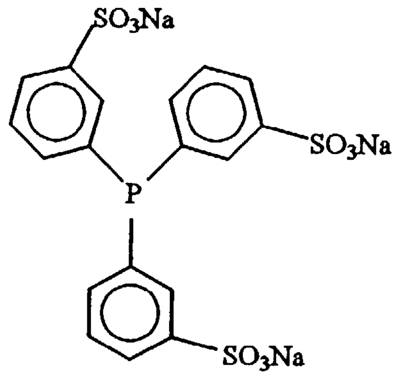

TPPTS

et les monophosphines chirales, telles que la (S)-(+)-néomenthyldiphénylphosphine((S)-NMDPP) (CAS Number = 43077-29-8).

On peut également citer O-SMe-$C_6H_4$-P-$Ph_2$, ainsi que O-SMe-$C_6H_4$-PPh-$C_6H_4$-O-SMe.

Comme polyphosphines, on peut mentionner les composés de la formule générale suivante :

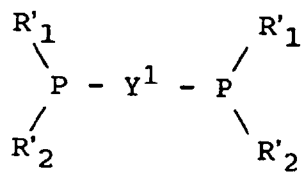

dans laquelle :

- $R'_1$ et $R'_2$ représentent chacun indépendamment alkyle, alkyle substitué, alkyle portant une fonction -COOH ou -$NH_2$, aryle, aryle substitué, tel que $C_6H_5$ ;
- $Y^1$ représente :
  - . alkylène ; alkylène substitué ;
  - . arylène ; arylène substitué ;
  - . binaphtyle ;
  - . 1,2-cyclopentyle ;
  - . $(CR'_3R'_4)_n$-Z-$(CR'_5R'_6)_m$-, avec $R'_3$ à $R'_6$ représentant chacun indépendamment H ou alkyle ; n et m représentant chacun un nombre entier de 0 à 3; et

Z = 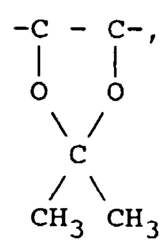

pyridile ou phénylène ;
  - . -$[(CR'_7R'_8)_p$-$T]_q$-$(CR'_9R'_{10})_r$, avec $R'_7$ à $R'_{10}$ représentant chacun indépendamment H ou alkyle ; p, q et r représentant un nombre entier de 1 à 5, et T = -O- ; -S- ; -$NR'_{11}$- ; -$PR'_{12}$ ($R'_{11}$, $R'_{12}$ = alkyle en $C_1$-$C_{14}$, aryle) ;

. 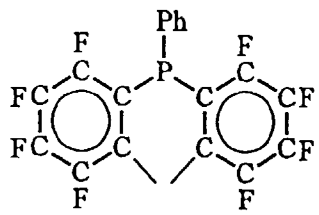 ;

et

. $-C_6H_5-CH=CH-C_6H_5-$.

On peut citer en particulier :

- les diphosphines telles que, par exemple :
  - . $Me_2PCH_2CH_2PMe_2$
  - . $Ph_2PCH_2PPh_2$
  - . $Ph_2PCH_2CH_2PPh_2$
  - . $Ph_2P(CH_2)_nPPh_2$, n = 3 à 14
  - . $(C_6F_5)_2PCH_2CH_2P(C_6F_5)_2$
  - . les diphosphines chirales capables d'apporter une stéréospécificité à la polymérisation, comme :
    - le (4R,5R)-(-)-O-isopropylidène-2,3-dihydroxy-1,4-bis(diphénylphosphino)butane ((R,R)-DIOP) (CAS Number = 37002-48-5) ;
    - le (4S,5S-(+)-O-isopropylidène-2,3-dihydroxy-1,4-bis(diphénylphosphino)butane ((S,S)-DIOP) ;
    - le (R)-(+)-2,2'-bis(diphénylphosphino)-1,1'-binaphtyl ((R)-BINAP) (CAS Number = 76189-55-4) ;
    - le (S)-(-)-2,2'-bis(diphénylphosphino)-1,1'-binaphtyl ((S)-BINAP) (CAS Number 76189-56-5);
    - le (2S,3S)-(-)-bis(diphénylphosphino)butane ((S,S)-CHIRAPHOS) (CAS Number = 648976-28-2);
    - le (2S,4S)-(-)-2,4-bis(diphénylphosphino)-pentane ((S,S)-BDPP) (CAS Number = 77876-39-2) ;
    - le R-(+)-1,2-bis(diphénylphosphino)propane ((R)-PROPHOS) (CAS Number = 67884-32-6) ;
    - les diphosphines représentées par les formules :

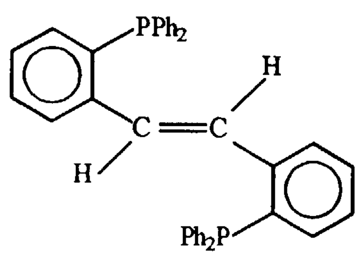 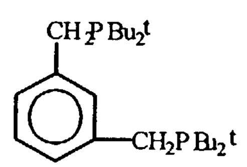 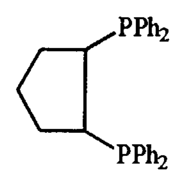

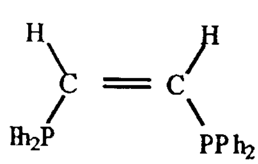 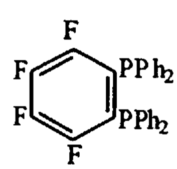 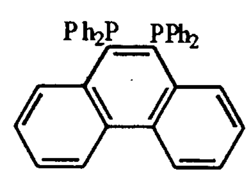

  - . les diphosphines contenant des hétéroatomes, comme par exemple :
    - $Ph_2PCH_2CH_2OCH_2CH_2PPh_2$ ;
    - $Ph_2PCH_2CH_2OCH_2CH_2OCH_2CH_2PPh_2$ ;

- $Ph(CH_2COOH)PCH_2CH_2P(CH_2COOH)Ph$ ;
- $Ph_2P(CH_2)_nS(CH_2)_mS(CH_2)_pPPh_2$ ; (n, m et p représentant chacun indépendamment 2 ou 3) ;
- les diphosphines de formule :

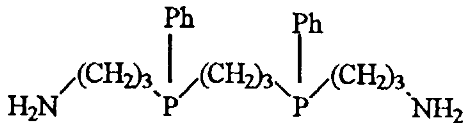

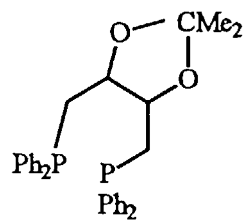

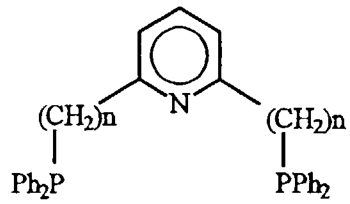

- les triphosphines, comme celles des formules :

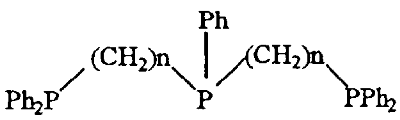

n = 2, 3

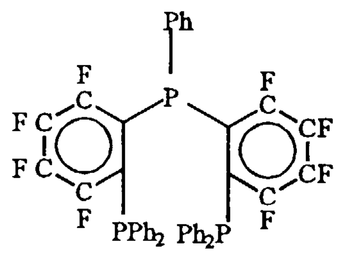

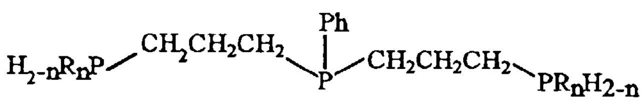

R = Me, Ph
n = 0, 1, 2

avec $PPh_2$ pouvant être remplacé par PPhMe ou $PMe_2$.

Les ligands peuvent également être choisis dans la famille des phosphites P(OR)(OR')(OR"), avec par exemple R, R' et R" choisis indépendamment parmi les groupes alkyles en $C_1$-$C_{14}$, particulièrement n-butyle, isopropyle, éthyle, méthyle, $(CH_3)_3CCH_2$-, et $C_6H_4$.

Le complexe de formule (I) peut par ailleurs porter une charge cationique, le rendant plus apte à coordiner les monomères, surtout les monomères polaires. Cette charge cationique peut être apportée par extraction d'un ligand halogéno, par exemple à l'aide de $AgBPh_4$, de $AgBF_4$, de $TlBF_4$ ou de $TlBPh_4$ ou encore de $AgB(C_6F_5)_4$ ou de $AgCF_3SO_3$.

Les complexes préférés sont ceux de la formule $RhCl(PRR'R")_3$, R, R' et R" étant tels que définis ci-dessus, et notamment le complexe de Wilkinson $RhCl(PPh_3)_3$ de numéro CAS 14694 95-2 ou son équivalent bromé RhBr $(PPh_3)_3$ (CAS = 14973-89).

Le complexe de formule (I) peut être introduit directement dans le milieu réactionnel, ou bien il peut être formé in situ dans ce milieu, à partir d'un sel métallique de formule $MA_b$ ou $MA_b.xH_2O$, M et A étant tels que définis ci-dessus, b valant 2 ou 3, et x étant compris entre 1 et 10, et des ligands L tels que définis ci-dessus.

On peut choisir les sels métalliques anhydres $MA_b$, parmi $RhCl_3$ (CAN = 100 49-07-7), $RhI_3$ (CAN = 15

492-38-3), $CoCl_2$ (CAN = 7646-79-9), $CoF_2$ (CAN = 10 026-17-2) et $CoF_3$ (CAN = 100 26-18-3), et les sels métalliques hydratés $MA_b.xH_2O$, parmi $RhBr_3.2H_2O$ (CAN = 15 608-29-4), $RhCl_3.xH_2O$ (x étant compris entre 1 et 10) (CAN = 20 765-98-4) et $CoCl_2.6H_2O$ (CAN = 7791-13-1).

Le catalyseur ne jouant pas le rôle de générateur de radicaux, il est donc indispensable de lui associer un tel composé. La réaction entre le générateur de radicaux et l'espèce du métal M décrite ci-avant donne lieu à une polymérisation contrôlée. On pourra ainsi poursuivre une polymérisation en ajoutant une nouvelle dose d'un monomère, éventuellement différent du premier. Si ce monomère est différent du premier, et qu'il est ajouté après épuisement du premier (ou jusqu'à une conversion élevée, supérieure à 80%, de préférence de 95%), on obtiendra un copolymère séquencé. S'il est ajouté en même temps que le premier, la copolymérisation sera aléatoire et on obtiendra un copolymère statistique. Pour la préparation de copolymères séquencés, on peut envisager l'utilisation d'un mélange de deux ou plusieurs catalyseurs, la seconde dose de monomère étant additionnée en présence d'un catalyseur différent mais toujours du type tel que défini dans le cadre de la présente invention, ce catalyseur devant alors être plus actif que celui déjà présent. C'est ainsi que l'on peut répéter cette opération à chaque nouvelle séquence que l'on veut préparer.

Suivant l'invention, des composés générateurs de radicaux qui conviennent particulièrement bien sont des composés halogénés activés par des effets électroniques donneurs et/ou récepteurs sur l'atome de carbone en position a du ou des halogènes dudit composé, notamment ceux indiqués ci-après :

Lorsque le générateur de radicaux est monofonctionnel, il peut être choisi dans les classes des composés suivants :

(a) les dérivés de formule :

$$CYZ_3$$

où :

- Y = Cl, Br, I, F, H ou $-CR^1R^2OH$, $R^1$ et $R^2$ représentant chacun indépendamment hydrogène ou alkyle en $C_1$-$C_{14}$ ; et
- Z = Cl ou Br,

par exemple, le tétrachlorure de carbone, le chloroforme, le tétrabromure de carbone, le bromotrichlorométhane, et le 2,2,2-tribromoéthanol ;

(b) les dérivés de formule :

$$R^3CCl_3$$

où $R^3$ représente un groupe phényle ; benzyle ; benzoyle ; alcoxycarbonyle ; $R^4CO$ avec $R^4$ représentant alkyle en $C_1$-$C_{14}$ ou aryle ; alkyle ; mésityle ; trifluorométhyle ; ou nitro,
comme, par exemple, l'α,α,α-trichlorotoluène, l'α,α,α-trichloroacétophénone, le trichloroacétate d'éthyle, le 1,1,1-trichloroéthane, le 1,1,1-trichloro-2-phényléthane, le trichlorométhylmésitylène, le 1,1,1-trichloro-2,2,2-trifluoroéthane et le trichloronitrométhane ;

(c) les dérivés de formule :

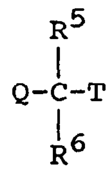

dans laquelle :

- Q représente un atome de chlore ou de brome ou un groupe acétate

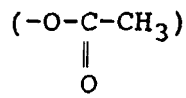

ou trifluoroacétate

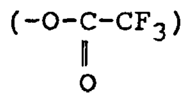

ou triflate ($O_3SCF_3$) ;

- $R^5$ représente un atome d'hydrogène, un groupe alkyle en $C_1$-$C_{14}$ ou un groupe aromatique, par exemple du type benzénique, anthracénique ou naphtalénique, ou un groupe $-CH_2OH$ ;
- T représente un groupe

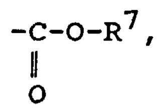

avec $R^7$ représentant chacun hydrogène ou un groupe alkyle ou aromatique; un groupe CN ; un groupe

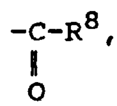

avec $R^8$ représentant alkyle en $C_1$-$C_{14}$, phényle ou isocyanate ; un groupe hydroxyle ; un groupe nitro ; un groupe amino substitué ou non ; un groupe alcoxy en $C_1$-$C_{14}$ ; un groupe $R^9CO$, avec $R^9$ représentant alkyle en $C_1$-$C_{14}$ ou aryle ;

- $R^6$ représente un groupe entrant dans les définitions de $R^5$ ou de Q ou un groupe fonctionnel tel qu'hydroxyle, nitro, amino substitué ou non, alcoxy en $C_1$-$C_{14}$, acyle, acide carboxylique, ester ;

comme, par exemple, l'acide 2-bromopropionique, l'acide 2-bromobutanoïque, l'acide 2-bromohexanoïque, le 2-bromo-2-méthylpropionate d'éthyle, le bromoacétonitrile, le 2-bromopropionitrile, la 2-bromoisobutyrophénone et le chloroacétylisocyanate ; le 2-bromo-2-nitro-1,3-propanediol et le 2-bromo-2-nitropropane ;

(d) les composés lactones ou lactames halogénés en α, comme l'α-bromo-α-méthyl-γ-butyrolactone ou α-bromo-γ-valérolactone, le lauryllactame halogéné ou le caprolactame halogéné ;

(e) les N-halosuccinimides, comme le N-bromosuccinimide, et les N-halophtalimides, comme le N-bromophtalimide ;

(f) les halogénures (chlorures et bromures) d'alkyl-sulfonyle, le reste alkyle étant notamment en $C_1$-$C_{14}$, ainsi que les halogénures d'arylène-sulfonyle, tels que ceux de formule :

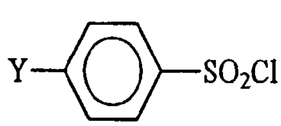

,

où Y = Me, Cl, OMe, $NO_2$

(g) les composés de formule :

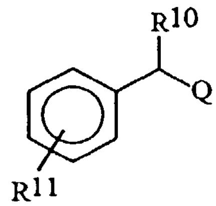

où :

- $R^{10}$ représente un atome d'hydrogène, un groupe alkyle en $C_1$-$C_{14}$ ou un groupe acide carboxylique, ester, nitrile ou cétone ;
- $R^{11}$ représente un atome d'hydrogène ou un groupe alkyle en $C_1$-$C_{14}$, hydroxyle, acyle, amine substituée ou non, nitro, alcoxy en $C_1$-$C_{14}$ ou sulfonate ($SO_3^-Na^+$ ou $K^+$) ; et
- Q a la signification donnée précédemment ;

(h) les composés de formule :

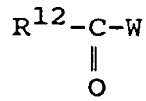

où :

- $R^{12}$ représente alkyle en $C_1$-$C_{14}$ ou aryle ; et
- W représente un halogène, préférentiellement Cl et Br, ou un pseudohalogène tel que $N_3$, SCN ;

(i) les composés de formule :

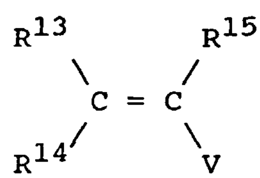

où :

- $R^{13}$, $R^{14}$ et $R^{15}$ représentent chacun indépendamment alkyle en $C_1$-$C_{14}$ ou aryle ; et
- V représente un halogène, tel que préférentiellement Cl, Br, ou également un groupement acétate, trifluoroacétate, triflate ;

et

(j) les halogénures aromatiques de formule :

Ar - U

où :

- Ar représente un groupement aromatique tel que $C_6H_5$- pouvant être substitué en position méta, ortho ou para par un groupement électroattracteur, tel que $NO_2$, $NO_3$, $SO_3$, ou électrodonneur, tel qu'un groupement alkyle ou un groupement -ONa ; et
- U représente un halogène, tel que préférentiellement Cl ou Br.

On peut également envisager l'utilisation de générateurs de radicaux bifonctionnels et de fonctionnalité supérieure ; les générateurs de radicaux bifonctionnels peuvent être constitués de deux générateurs de radicaux monofonctionnels $A^1$ et $A^2$ issus des classes (c) à (j) précitées, reliés par une chaîne d'unités méthylène ou par un cycle benzénique ou par une combinaison des deux, tels que représentés par les formules : $A^1\text{-}(CH_2)_S\text{-}A^2$ avec s entier de 1 à 14,

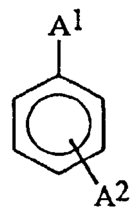

et

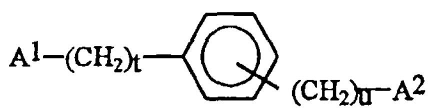

avec t et u représentant chacun indépendamment un entier de 1 à 14.

Dans le cas où $A^1$ et $A^2$ sont issus de la classe (c), on peut présenter les générateurs de radicaux bifonctionnels sous la formule :

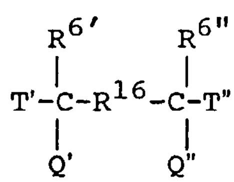

dans laquelle :

- T' et T" représentent chacun indépendamment un groupe entrant dans la définition de T ;
- Q' et Q" représentent chacun indépendamment un groupe entrant dans la défintion de Q ;
- $R^{6'}$ et $R^{6''}$ représentent chacun indépendamment un groupe entrant dans la définition de $R^6$ ; et
- $R^{16}$ représente un groupe $-(CH_2)_s-$,

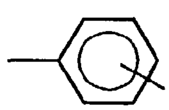 ,

ou

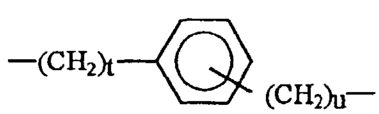

tels que définis ci-dessus.

On peut par exemple citer les amorceurs bifonctionnels des formules :

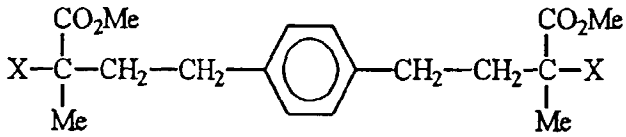

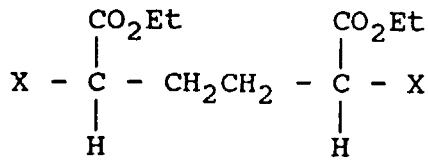

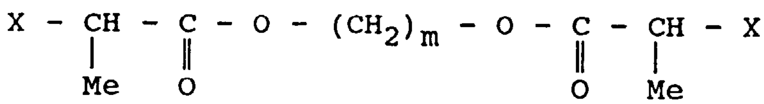

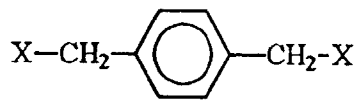

avec X = halogène, tel que Br et Cl ; et m = entier de 1 à 10.

L'emploi d'un amorceur bifonctionnel permet la préparation de copolymères triséquencés de type A(b)B(b)A, en synthétisant d'abord le bloc central difonctionnel, qui sert à amorcer la polymérisation du monomère A.

Les composés générateurs de radicaux multifonctionnels peuvent être constitués d'au moins trois groupements générateurs de radicaux monofonctionnels $A^1$, $A^2$ et $A^3$ issus des classes (c) à (j) précitées reliés entre eux par un cycle benzénique, comme, par exemple, ceux répondant à la formule :

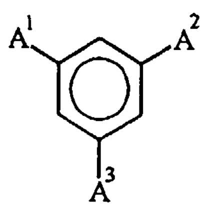

D'autres composés générateurs de radicaux bifonctionnels sont les tri- ou tétrahalométhanes et les dérivés trichlorométhylés des classes (a) et (b) précitées, ces mêmes tri- et tétrahalométhanes pouvant également servir de composés générateurs de radicaux multifonctionnels.

On pourrait également utiliser d'autres composés générateurs de radicaux difonctionnels que ceux représentés ci-dessus, notamment ceux de la famille des anhydrides acétiques comme l'anhydride d'acide chloroacétique et l'anhydride d'acide chlorodifluoroacétique ainsi que des générateurs de radicaux de polymérisation radicalaire classique comme les composés azoïques, un exemple représentatif de ces derniers étant notamment le 2,2'-azo-bis-isobutyronitrile.

La longueur des chaînes polymères étant préalablement déterminée par le rapport molaire du ou des monomères (méth)acryliques ou vinyliques ou diéniques sur le ou les composés générateurs de radicaux, ce rapport est de 1 - 100 000, avantageusement de 50 à 2 000. Quant au rapport molaire du métal M sur le (ou les) générateur(s) de radicaux, il est généralement compris entre 0,01 et 100, avantageusement entre 0,05 et 20 et plus particulièrement

inférieur ou égal à 1. Le rapport molaire L:M, dans le cas de la formation du composé (I) in situ, peut être compris entre 0,01 et 100, de préférence entre 1 et 5.

Le paramètre de la température de polymérisation ou de copolymérisation est un point extrêmement important qui distingue le procédé de l'invention des procédés utilisant des systèmes catalytiques actuellement connus. Avec les procédés catalytiques connus, il se produit une inactivité du catalyseur en dessous d'une température qui se situe autour de 100°C en l'absence d'activateur. C'est ainsi qu'à 50°C, il ne se produit pas de polymérisation avec le catalyseur CuCl/2,2-bipyridine, et, en l'absence d'activateur, avec le catalyseur $RuCl_2(PPh_3)_3$, et cela même après plusieurs jours de réaction. On peut parler, dans le cadre de la présente invention, de conditions réactionnelles douces car il est très peu courant que des catalyseurs en synthèse restent actifs à des températures pouvant descendre jusqu'à 0°C à la pression atmosphérique. Cet avantage est extrêmement important d'autant plus que le stéréocontrôle de la réaction de polymérisation ou copolymérisation est favorisé par un abaissement de la température. D'autre part, les conditions réactionnelles en masse (c'est-à-dire dans le ou les monomères purs) et en solution, émulsion ou suspension sont d'une manière générale identiques. La température et tous les rapports molaires peuvent être les mêmes quel que soit le procédé de réaction utilisé. La possibilité de travailler, sans risques, dans le monomère pur constitue bien entendu une amélioration au regard des polymérisations radicalaires classiques. La concentration en centres actifs étant constante tout au long de la réaction de polymérisation ou copolymérisation en raison de l'absence de réactions de terminaison, l'exothermie importante et brutale (ou effet Trommsdorf) des polymérisations radicalaires classiques ne se produit pas. Pour le procédé industriel, ceci constitue bien entendu un progrès important puisque les polymérisations ou copolymérisations menées dans ces conditions ne risquent plus de devenir totalement incontrôlées. D'une manière générale, la polymérisation ou copolymérisation sera effectuée à une température de 0°C à 130°C, avantageusement entre 20 et 80°C sans aucune perte d'activité du catalyseur.

Les systèmes d'amorçage selon l'invention étant compatibles avec l'eau, on pourra donc effectuer les réactions de polymérisation ou copolymérisation en milieu aqueux, en présence ou non d'émulsifiants. C'est ainsi que les polymérisations en milieu aqueux sont effectuées soit en suspension (composé générateur de radicaux insoluble dans l'eau) soit en émulsion (composé générateur de radicaux soluble dans l'eau) en présence d'émulsifiants. Les émulsifiants peuvent être des surfactants anioniques, tels que le dodécylbenzène sulfonate de sodium, le dodécyl sulfate de sodium, le lauryl sulfate de sodium et leurs mélanges ou du type neutre comme les esters de glycol, les esters de sorbitane et de polyéthylène glycol tels que le monolaurate, le monopalmitate, oléate et stéarate de sorbitane et de polyéthylène glycol, les esters d'acides gras et de polyéthylène glycol tels que le stéarate de polyéthylène glycol et les éthers d'alcool gras et de polyéthylène glycol tels que les éthers stéarylique et cétylique de polyéthylène glycol.

Les réactions de polymérisation ou copolymérisation de l'invention, lorsqu'elles sont menées en solution, peuvent bien entendu également se faire en présence d'un solvant organique ou d'un mélange de solvants organiques appartenant aux familles de solvants suivantes :

- les hydrocarbures aromatiques (apolaires aprotiques) : benzène, toluène, éthylbenzène, xylène ;
- les hydrocarbures chlorés (polaires aprotiques) : chlorure de méthylène, chlorobenzène ;
- les éthers, tels que le diphényl éther ;
- les éthers cycliques (polaires aprotiques) : tétrahydrofuranne (THF), dioxane ;
- les esters (polaires) : acétate d'éthyle, acétate de cyclohexyle ;
- les cétones (polaires) : méthyl éthyl cétone, cyclohexanone.

Les solvants organiques précités conviennent particulièrement bien lorsque les monomères à polymériser ou copolymériser sont des monomères acryliques (méthacrylates, acrylates, l'acrylonitrile) et vinylaromatiques tels que styréniques.

Dans certains cas, notamment dans la polymérisation du méthacrylate de n-butyle et du styrène, on pourra utiliser l'hexane et le cyclohexane et dans la polymérisation de l'acétate de vinyle et de l'acrylonitrile, on pourra utiliser le diméthylformamide, le diméthylsulfoxyde, l'acétonitrile ou l'acétone.

On peut également envisager un mélange d'eau et d'au moins un solvant précité, comme le mélange eau/THF (cf Exemple 1). Dans de tels cas, l'eau est bénéfique car elle permet d'augmenter le rendement de la réaction de polymérisation.

Ainsi, conformément à la présente invention, on peut avantageusement conduire la (co)polymérisation des (méth)acrylates d'alkyle et du styrène en présence du système d'amorçage halogénure d'alkyle/$RhCl(PPh_3)_3$ dans un mélange eau/solvant organique.

D'une manière générale, le procédé de polymérisation et de copolymérisation suivant l'invention se déroule d'une manière identique pour l'homopolymérisation et la copolymérisation statistique. Pour la préparation de copolymères séquencés y compris les copolymères séquencés en étoile, les conditions expérimentales peuvent changer lors de l'addition d'un monomère différent du premier après la polymérisation du premier monomère. Par exemple, on peut faire varier la température dans un sens ou dans l'autre, le seconde dose pouvant être ajoutée avec un solvant.

Pour la préparation de macromonomères ou de polymères α,ω fonctionnalisés (téléchéliques), on pourrait envisager le même type de variation de conditions expérimentales.

Comme monomères polymérisables et copolymérisables en présence du système d'amorçage de polymérisation ou copolymérisation proposé, on peut citer les monomères (méth)acryliques et vinyliques (vinylaromatiques, esters vinyliques comme acétate de vinyle ; chlorure de vinyle et fluorure de vinyle), ainsi que vinylidéniques (fluorure de vinylidène).

Le système d'amorçage selon l'invention convient aussi pour la (co)polymérisation de monomères oléfiniques, éventuellement fluorés, comme l'éthylène, le butène, l'hexène, le 1-octène.

Par monomère acrylique au sens de la présente invention, on entend un monomère choisi parmi les acrylates d'alkyle primaire, secondaire ou tertiaire, dont le groupe alkyle, le cas échéant substitué par exemple par au moins un atome d'halogène, tel que fluor, et/ou au moins un groupe hydroxyle, contient 1 à 18 atomes de carbone, en mentionnant plus particulièrement l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2 hexyle, l'acrylate de nonyle, l'acrylate de lauryle, l'acrylate de stéaryle, l'acrylate de cyclohexyle, l'acrylate d'isodécyle, ainsi que l'acrylate de phényle, l'acrylate d'isobornyle, les acrylates d'alkylthioalkyle ou d'alcoxyalkyle, l'acrylonitrile et les dialkylacrylamides.

Par monomère méthacrylique au sens de la présente invention, on entend un monomère choisi parmi les méthacrylates d'alkyle dont le groupe alkyle, le cas échéant substitué, par exemple par au moins un atome d'halogène comme le fluor et/ou au moins un groupe hydroxyle, contient 1 à 18 atomes de carbone, comme les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, d'hexyle, d'éthyl-2 hexyle, de cyclohexyle, d'octyle, d'i-octyle, de décyle, de β-hydroxyéthyle, d'hydroxypropyle, d'hydroxybutyle, ainsi que le méthacrylate de glycidyle, le méthacrylate de norbornyle, le méthacrylonitrile et les dialkylméthacrylamides.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène.

Par monomère diénique, on entend un diène choisi parmi les diènes linéaires ou cycliques, conjugués ou non-conjugués comme par exemple le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl)-2-norbornène, le 5-(5-hexényl)-2-norbornène, le 1,5-cyclooctadiène, le bicyclo[2,2,2]octa-2,5-diène, le cyclopentadiène, le 4,7,8,9-tétrahydroindène et l'isopropylidène tétrahydroindène.

Suivant l'invention, il a été constaté que, par une combinaison judicieuse d'un complexe de métal tel que défini précédemment, et d'un composé générateur de radicaux de polymérisation, on peut arriver à obtenir des homopolymères et des copolymères séquencés et statistiques parfaitement définis et contrôlés ainsi que des copolymères à gradient, des copolymères étoilés et des macromonomères et des polymères α,ω fonctionnalisés (téléchéliques) qui n'ont jusqu'ici pu être synthétisés avec les procédés de polymérisation radicalaire classiques.

L'invention concerne donc également les polymères ou copolymères tels qu'obtenus par le procédé précité, de masses moléculaires contrôlées et de polymolécularité étroite.

Les polymères et copolymères de monomères (méth)acryliques, vinyliques tels qu'obtenus par le procédé de l'invention présentent des masses moléculaires $\overline{Mn}$ se situant entre 1000 et 500 000 g/mole et une polymolécularité $\overline{Mw}/\overline{Mn}$ particulièrement étroite, inférieure à 2, voire inférieure à 1,5. De plus, le procédé de l'invention est extrêmement régiosélectif, c'est-à-dire qu'il permet un excellent contrôle sur l'orientation des unités monomères lors de la propagation. D'autre part, les enchaînements s'orientent exclusivement tête à queue et non plus tête à tête comme cela pouvait être le cas en polymérisation radicalaire classique. Cela favorise la stabilité thermique des polymères et copolymères ainsi préparés. L'absence de réactions de terminaison élimine toute autre possibilité d'enchaînement tête à tête.

En comparaison avec les procédés de polymérisation et de copolymérisation radicalaires et ioniques connus, le procédé de la présente invention présente les avantages suivants :

- polymérisation homogène et vivante. Comme cela est montré dans les Exemples ci-après, la polymérisation est vivante selon les critères généralement avancés : évolution linéaire des masses moyennes en fonction de la conversion, évolution linéaire de ln(1/(1-conversion)) ou de $\ln[M]_o/[M]$ en fonction du temps, reprise de la polymérisation après ajout d'une nouvelle dose de monomère (Penczek, S. Dans *Makromol. Chem. Rapid. Commun.* 1991, *12*, 77) ;
- excellent contrôle moléculaire : $\overline{Mw}/\overline{Mn}$ étroit inférieur à 2 ; bonne corrélation entre la $\overline{Mn}$ théorique et la $\overline{Mn}$ expérimentale ; possibilité de préparation de copolymères séquencés y compris ceux en étoile ;
- polymérisation quantitative entraînant une consommation totale du monomère ;

- conditions de température douces allant de 0°C à 130°C en particulier de 20 à 80°C, et pression ordinaire (légère surpression d'azote) ;
- le temps de réaction dépend de la concentration du milieu réactionnel. En effet, plus la concentration en monomère est faible, plus la cinétique de polymérisation sera lente ;
- compatibilité en milieux aqueux car les catalyseurs utilisés ne se dégradent pas en présence d'eau, la présence d'eau étant même bénéfique dans le cas des mélanges eau/THF. Possibilité de polymérisation en émulsion et suspension, en présence ou non d'émulsifiants, l'utilisation de phosphines solubles telles que, par exemple, $((Na^{+-}O_3SC_6H_4)_3P)$ permettant de solubiliser le complexe dans la phase aqueuse ;
- possibilité de stéréocontrôle, c'est-à-dire du contrôle de la tacticité hétéro, syndio ou isotactique, en utilisant des catalyseurs chiraux ;
- excellent contrôle de la synthèse des polymères ou copolymères obtenus dont les masses moléculaires varient entre 1000 et 500 000 g/mole (la masse moléculaire du polymère obtenu est déterminée par le rapport molaire initial monomère/amorceur et ce, jusqu'à des masses de 500 000 g/mole) ;
- la résistance à la dégradation thermique des polymères et copolymères est améliorée en raison de l'absence de réactions de terminaison (combinaisons et disproportions), pouvant être montrée notamment par analyse thermogravimétrique ;
- obtention de produits difficilement accessibles par les techniques de polymérisation usuelles, tels que copolymères séquencés purs, copolymères statistiques définis et polymères hyperbranchés utilisables comme adhésifs de formulation contrôlée, additifs antichocs, agents émulsifiants, agents interfaciaux ;
- obtention de matériaux à propriétés améliorées ; l'absence de doubles liaisons terminales permet d'augmenter la température de dépolymérisation des polymères, notamment du PMMA ;
- polymérisation contrôlée qui permet d'éviter l'autoaccélération de la polymérisation (appelée effet de gel ou effet Trommsdorf). Le contrôle de la polymérisation par le complexe de métal M permet d'éviter l'autoaccélération subite de la polymérisation avec prise en masse très rapide. Ce phénomène est en général néfaste pour l'industriel et le produit. En particulier, pour le PMMA devant se présenter sous forme de plaques coulées, il est important que la polymérisation soit contrôlée afin d'éviter l'apparition de bulles, ou de défauts à la surface de la plaque. On peut parvenir à éviter le point de gel à l'aide de cycles, parfois longs, de températures adaptés. Une seule température est préférentiellement utilisée, ce qui est une simplification pour le procédé.

On peut également indiquer que les complexes du rhodium n'exigent pas de conditions soignées de polymérisation, telles que celles employées par exemple avec des catalyseurs de type Ziegler-Natta.

On donne ci-après des exemples non limitatifs décrivant la préparation de polymères tels qu'obtenus suivant le procédé de la présente invention.

Les masses moléculaires moyenne en nombre expérimentales ($\overline{Mn}_{exp}$) sont obtenues par chromatographie de perméation sur gel (GPC) calibré avec des étalons de poly(méthacrylate de méthyle) (PMMA) monodisperses, sauf indication contraire. Les masses moléculaires moyennes en nombre théoriques ($\overline{Mn}_{théo}$) sont calculées à partir du rapport molaire monomère/amorceur, corrigé par le rendement ($\overline{Mn}_{théo}$ = ([M] x rendement)/([amorceur] x 100), [M] étant la concentration en monomère. Le facteur f est le facteur d'efficacité d'amorçage, soit $\overline{Mn}_{théo}/\overline{Mn}_{exp}$. L'indice de polymolécularité ou polydispersité est $\overline{Mw}/\overline{Mn}$.

Exemple 1 : Polymérisation du MMA dans un mélange eau/THF à 60°C

Dans un ballon muni d'un agitateur magnétique, on introduit 192 mg (0,2076 millimole) de $RhCl(PPh_3)_3$. Le ballon est équipé d'un robinet à trois voies permettant l'utilisation de la méthode de Schlenk ; le ballon peut ainsi être placé sous azote via un cycle vide-azote répété à trois reprises. On additionne alors à la seringue (purgée à l'azote) 2,0 ml de THF, ainsi que 2,0 ml d'eau désionisée (tous deux préalablement dégazés par congélation et décongélation effectuées sous vide). On injecte alors 2,80 g (3,0 ml) de MMA, préalablement distillé pour éliminer les stabilisants. Ensuite, on ajoute 1,0 ml d'une solution de $CCl_4$ à une concentration de 0,1036 mole/litre dans le THF.

La concentration en MMA est donc de 3,5 moles/litre, et le rapport molaire $[MMA]/[CCl_4]$, de 270.

Le ballon est alors placé dans un bain thermostaté à 60°C, sous agitation magnétique, durant 24 heures. Après ce temps, on ouvre le ballon et on dilue le milieu réactionnel avec du THF, puis on précipite le polymère dans du méthanol à froid. Le polymère est séché sous vide à 60°C jusqu'à poids constant.

Rendement en polymère : 100%

| | |
|---|---|
| $\overline{Mn}_{exp}$ = | 29 800 |
| $\overline{Mn}_{théo}$ = | 27 000 |
| f = | 0,91 |
| $\overline{Mw}/\overline{Mn}$ = | 1,48 |

Tacticité = 62% syndio
34% hétéro
4% iso

Exemples 2 à 6

On procède comme à l'Exemple 1, avec les conditions suivantes :

- 191,7 mg de $RhCl(PPh_3)_3$ ;
- 4 ml de THF (Exemple 2) ou d'un mélange THF/eau dont les proportions varient comme indiqué dans le Tableau 1 ci-après (Exemples 3 à 5) ;
- 3,0 ml de MMA ; et
- 1,0 ml d'une solution de $CCl_4$ à une concentration de 0,1 mole/litre dans le THF,

la concentration en MMA étant donc de 3,5 moles/litre, et le rapport molaire [MMA]/[$CCl_4$], de 280.
Les rendements, la $\overline{Mn}_{exp}$ (calibration avec le polystyrène avec correction par un facteur 1,1) et la valeur f sont rapportés dans le Tableau 1 ci-après.

Tableau 1

| Exemple | Solvant (ml) | | Rendement (%) | $\overline{Mn}_{exp}$ | f |
|---|---|---|---|---|---|
| | eau | THF | | | |
| 2 | - | 4 | 10 | 4 000 | 0,7 |
| 3 | quelques gouttes | 4 | 10 | 3 900 | 0,72 |
| 4 | 0,5 | 3,5 | 38 | 89 600 | 0,12 |
| 5 | 1 | 3 | 55 | 133 600 | 0,11 |
| 6* | 2 | 2 | 100 | 34 200 | 0,82 |

* La tacticité du polymère obtenu à l'Exemple 6 est de 64% syndio, 34% hétéro et 2% iso.

Exemples 7 à 10

On procède comme à l'Exemple 1, excepté que l'on modifie le rapport molaire [MMA]/[$CCl_4$] comme indiqué dans le Tableau 2 ci-après.
Les valeurs des $\overline{Mn}_{théo}$ et $\overline{Mn}_{exp}$, du rendement, de $\overline{Mw}/\overline{Mn}$ et de f sont rapportées également dans le Tableau 2 ci-après.

Tableau 2

| Exemple | [MMA]/[$CCl_4$] | $\overline{Mn}_{théo}$ | $\overline{Mn}_{exp}$ | Rendement (%) | $\overline{M}w/\overline{Mn}$ | f |
|---|---|---|---|---|---|---|
| 7 | 270 | 27 000 | 29 800 | 100 | 1,48 | 0,91 |
| 8* | 542 | 54 200 | 57 500 | 100 | 1,5 | 0,94 |
| 9 | 992 | 92 400 | 98 200 | 93 | 1,67 | 0,94 |
| 10 | 2157 | 185 700 | 157 500 | 86 | 1,7 | 1,18 |

* La tacticité du polymère obtenu à l'Exemple 8 est de 59% syndio, 38% hétéro, 3% iso.

Exemples 11 à 15

On a procédé comme à l'Exemple 1, avec les conditions suivantes :

- 153,4 mg de $RhCl(PPh_3)_3$ ;
- 0,8 ml d'une solution de $CCl_4$ à une concentration de 0,1036 mole/litre dans le THF ; et
- précipitation des polymères dans l'heptane.

Les résultats obtenus sont rapportés dans le Tableau 3 ci-après.

Tableau 3

| Exemple | Temps (h) | Rendement (%) | $\overline{Mn}_{exp}$ | $\overline{Mw}/\overline{Mn}$ | $ln[M]_o/[M]$ | f |
|---|---|---|---|---|---|---|
| 11 | 0,5 | 11,3 | 33 800 | 1,79 | 0,12 | 0,75 |
| 12 | 2 | 17,5 | 74 000 | 1,64 | 0,192 | 0,53 |
| 13 | 5 | 32 | 99 600 | 1,77 | 0,386 | 0,73 |
| 14 | 10 | 43 | 131 500 | 1,75 | 0,562 | 0,74 |
| 15 | 24 | 70 | 144 000 | 2 | 1,2 | 1,1 |

On observe une évolution exponentielle du rendement au cours du temps. La relation "$ln[M]_o/[M]$ vs temps" est une relation linéaire, apportant la preuve d'un processus vivant (bon contrôle de la polymérisation). Par ailleurs, la $\overline{Mn}_{exp}$ varie presque linéairement avec le rendement, les déviations observées étant dues aux erreurs expérimentales.

Exemple 16 : Polymérisation du styrène

On procède comme à l'Exemple 1, avec les conditions suivantes :

- 154,6 mg (0,167 mmole) de $RhCl(PPh_3)_3$ ;
- 2,0 ml (17,38 mmoles) de styrène (Acros), séché sur $CaH_2$ et distillé sur polystyryllithium ; et
- 0,8 ml d'une solution de $CCl_4$ à une concentration de 0,1036 mole/litre dans le THF ; et
- durée de la réaction : 120 heures.

Rendement : 72%

$\overline{Mn}_{exp}$ = 41 000
$\overline{Mn}_{théo}$ = 15 100
f = 0,37
$\overline{Mw}/\overline{Mn}$ = 1,98

Exemple 17 : Polymérisation du méthacrylate de n-butyle (n-BuMA)

On procède comme à l'Exemple 1, avec les conditions suivantes :

- 154,4 mg (0,167 mmole) de $RhCl(PPh_3)_3$ ;
- 3 ml (18,86 mmoles) de n-BuMA (Acros), séché sur $CaH_2$ et distillé ;
- 0,8 ml d'une solution de $CCl_4$ à une concentration de 0,1036 mole/litre dans le THF ; et
- durée de la réaction : 48 heures.

Rendement : 100%

$\overline{Mn}_{exp}$ = 25 600 (calibration par le polystyrène)
$\overline{Mw}/\overline{Mn}$ = 1,59

Exemple 18 : Reprise de polymérisation du MMA

On procède comme à l'Exemple 1, en conduisant une première étape avec les conditions suivantes :

- 192,1 mg (0,2076 mmole) de $RhCl(PPh_3)_3$ ;
- 3,0 ml de MMA ;
- 1,0 ml d'une solution de $CCl_4$ à une concentration de 0,1036 mole/litre dans le THF ; et
- durée de réaction : 17 heures.

Après cette première séquence, le rendement est de 100%, la $\overline{Mn}_{exp}$ est de 29 800, $\overline{Mw}/\overline{Mn}$ vaut 1,48, et f vaut 0,91.
On ajoute alors à nouveau 2,0 ml de THF, 2,0 ml d'eau et 3,0 ml de MMA. On laisse alors réagir durant 25

heures, toujours à 60°C. Le polymère est précipité dans le méthanol.

Après cette deuxième séquence, la $\overline{Mn}_{exp}$ est de 54 100, le rendement, de 100%, l'indice de polymolécularité ($\overline{Mw}/\overline{Mn}$), de 1,7, et f vaut 1.

Exemples 19 et 20 : Copolymérisation statistique du MMA et du n-BuMA

On procède comme à l'Exemple 1, avec cependant les conditions suivantes :

- 115 mg (0,124 mmole) de $RhCl(PPh_3)_3$ ;
- 1,5 ml (14,02 mmoles) de MMA et 1,5 ml (9,43 mmoles) de nBuMA ; et
- 0,6 ml d'une solution de $CCl_4$ à une concentration de 0,1036 mole/litre dans le THF.

Les résultats obtenus sont rapportés dans le Tableau 4 ci-après.

Tableau 4

| Exemple | Temps (h) | Rendement (%) | $\overline{Mn}_{exp}$* | $\overline{Mw}/\overline{Mn}$ |
|---|---|---|---|---|
| 19 | 1,25 | 34 | 18 500 | 1,88 |
| 20 | 18 | 100 | 54 000 | 1,41 |

* Calibration avec le polystyrène.

La $\overline{Mn}_{théo}$ à 100% de rendement est de 44 000. La relation "$\overline{Mn}_{théo}$ vs rendement" est une relation linéaire. La Tg du copolymère final, mesurée par DSC, est de 80°C, et obéit donc à la loi de Fox ($Tg_{Pn\text{-}BuMA}$ = 8°C et $Tg_{PMMA}$ ≃ 120°C). L'analyse par RMM $^1$H indique une composition (en moles) de 66% en MMA et de 34% en n-BuMA.

Exemple 21 : Copolymérisation séquencée MMA-b-nBuMA

On procède comme à l'Exemple 1, en conduisant une première étape avec les conditions suivantes :

- 115 mg (0,1243 mmole) de $RhCl(PPh_3)_3$ ;
- 1 ml d'eau ;
- 1 ml de THF ;
- 1,5 ml de MMA ;
- 0,6 ml d'une solution de $CCl_4$ à une concentration de 0,1036 mole/litre dans le THF ; et
- durée de la réaction : 22 heures.

Après cette première séquence, le rendement est de 100%.

On ajoute alors à nouveau 2 ml de THF et 1,5 ml de n-BuMA et on laisse réagir durant 24 heures, la température étant toujours maintenue à 60°C. Le copolymère obtenu est précipité dans le méthanol à froid.

Le rendement total (après les deux séquences) est de 90%. Concernant le copolymère final :

$\overline{Mn}_{exp}$ = 44 000 (calibration avec le polystyrène)
$\overline{Mn}_{théo}$ = 44 000
f = 1,0
$\overline{M_w}/\overline{M_n}$ = 1,98

L'analyse par DSC indique deux Tg, l'une se situant à 8°C (correspondant au bloc de Pn-BuMA), et l'autre à 117°C (correspondant au bloc de PMMA).

Exemple 22: Polymérisation du MMA avec formation du complexe de rhodium in situ

Les conditions expérimentales sont identiques à celles utilisées dans l'Exemple 1. Dans un tube, on introduit 0,0292 g de $RhCl_3.H_2O$ (0,139 mmole) ainsi que 0,1465 g, soit 4 équivalents, de triphénylphosphine (préalablement recristallisée dans l'éthanol). On effectue une série de trois cycles vide-azote afin d'éliminer l'oxygène. On additionne à l'aide d'une seringue 1,4 ml d'eau bidistillée ainsi que 1,4 ml de THF (ceux-ci ayant été dégazés par passage d'un flux d'azote). Le milieu réactionnel est alors placé dans un bain à 60°C durant une période de 1 heure. On ajoute ensuite 2 ml de MMA ainsi que 0,6 ml d'une solution (0,1036 mole/l) de $CCl_4$ dans le THF. On laisse réagir pendant

16 h à 60°C. Le milieu réactionnel est dissous dans du THF et précipité dans du THF. On obtient un rendement quantitatif en polymère. La $\overline{Mw}$, calculée par GPC, est de 28500 (calibration polystyrène) ; f vaut 1,05 ; et $\overline{Mw}/\overline{Mn}$ vaut 1,45.

Exemples 23 à 27 : Polymérisation du MMA dans un mélange eau/THF à 68°C

On procède comme à l'Exemple 1, avec les conditions suivantes :

- 1 ml de THF
- 1 ml d'eau
- 1,5 ml de MMA
- 0,5 ml de $CCl_4$ à une concentration de 0,1036 mole/litre dans le THF ;
- 0,096 g de $RhCl(PPh_3)_3$
- température : 68°C
- précipitation des polymères dans l'heptane.

Les résultats obtenus sont rapportés dans le Tableau 5 ci-après, à partir duquel on peut formuler les mêmes observations que pour les Exemples 11 à 15.

Tableau 5

| Exemple | Temps (min) | Rendement (%) | $\overline{Mn}_{exp}$ | $\overline{Mw}/\overline{Mn}$ | $\ln[M]_o/[M]$ |
|---|---|---|---|---|---|
| 23 | 30 | 24 | 15 980 | 1,95 | 0,27 |
| 24 | 60 | 33 | 22 150 | 1,91 | 0,40 |
| 25 | 120 | 41 | 26 120 | 1,84 | 0,53 |
| 26 | 250 | 57 | 48 720 | 1,51 | 0,84 |
| 27 | 480 | 86 | 58 100 | 1,58 | 1,97 |

## Revendications

1. Procédé de polymérisation ou copolymérisation radicalaire contrôlée de monomères (méth)acryliques et/ou vinyliques et/ou vinylidéniques et/ou diéniques, caractérisé par le fait que l'on polymérise ou copolymérise en masse, solution, émulsion ou suspension, à une température pouvant descendre jusqu'à 0°C, au moins un desdits monomères en présence d'un système d'amorçage comprenant :

   - au moins un composé générateur de radicaux non peroxydique ; et
   - au moins un catalyseur constitué par un complexe de métal, représenté par la formule suivante (I) :

   $$MA_a(L)_n \qquad (I)$$

   dans laquelle :

   . M représente Rh, Co, ou Ir ;
   . A représente un halogène ou un pseudo-halogène ;
   . les L, identiques ou différents, représentent chacun un ligand, pouvant être un ligand chiral, qui est choisi parmi le cyclooctadiène, PRR'R", P(OR)(OR')(OR"), NRR'R", ORR', SRR', SeRR', AsRR'R", SbRR'R", chaque R, R', R" représentant indépendamment un groupe alkyle en $C_1$-$C_{14}$, éventuellement substitué, ou un groupe aromatique éventuellement substitué,
   au moins deux de ces ligands pouvant être reliés entre eux par un ou plusieurs radicaux bivalents ;
   . a est un entier tel que $1 \leq a \leq 3$ ;
   . n est un entier tel que $1 \leq n \leq 5$,

   et en l'absence d'activateur.

2. Procédé conforme à la revendication 1, caractérisé en ce que le métal M est Rh.

3. Procédé conforme à l'une des revendications 1 à 2, caractérisé en ce que A représente un halogène choisi parmi Cl, Br, F et I ou un pseudo-halogène choisi parmi CN, NCS, $NO_2$, $NO_3$, $N_3$, $OCOCF_3$, $OCOCH_3$ et $BF_4$.

4. Procédé conforme à l'une des revendications 1 à 3, caractérisé en ce que les L représentent chacun une phosphine PRR'R", R, R', R" représentant chacun indépendamment un groupe alkyle en $C_1$-$C_{14}$ pouvant être substitué par $SO_3^-$, COOH, alcoxy, alkyl-S- ou un groupe aromatique pouvant être substitué par au moins un groupement choisi notamment parmi halogène, alkyle, $CF_3$, alcoxy, $NO_2$, $SO_3^-$, au moins deux de ces ligands pouvant être reliés pour former une polyphosphine, laquelle peut contenir au moins un hétéroatome, tel que N, P, S et O.

5. Procédé conforme à l'une des revendications 1 à 4, caractérisé en ce que le radical bivalent reliant deux ligands L est un radical alkylène.

6. Procédé conforme à l'une des revendications 1 à 5, caractérisé en ce que le complexe de formule (I) porte une charge cationique.

7. Procédé conforme à l'une des revendications 1 à 4, caractérisé en ce que le catalyseur est RhCl(PRR'R"), R, R' et R" étant tels que définis à la revendication 1, et notamment $RhCl(PPh_3)_3$ ou $RhBr(PPh_3)_3$.

8. Procédé conforme à l'une des revendications 1 à 7, caractérisé en ce que le complexe de formule (I) est formé in situ dans le milieu réactionnel à partir d'un sel métallique de formule $MA_b$ ou $MA_b.xH_2O$, M et A étant tels que définis à la revendication 1, b valant 2 ou 3, et x étant compris entre 1 et 10, et des ligands L tels que définis à la revendication 1.

9. Procédé selon la revendication 8, caractérisé par le fait que l'on choisit les sels métalliques anhydres $MA_b$ parmi $RhCl_3$, $RhI_3$, $CoCl_2$, $CoF_2$ et $CoF_3$, et les sels métalliques hydratés $MA_b.xH_2O$ parmi $RhBr_3.2H_2O$, $RhCl_3.xH_2O$ (x étant compris entre 1 et 10) et $CoCl_2.6H_2O$.

10. Procédé conforme à l'une des revendications 1 à 9, caractérisé en ce que le composé générateur de radicaux libres est monofonctionnel et choisi dans les classes des composés suivants :

(a) les dérivés de formule :

$$CYZ_3$$

où :

- Y = Cl, Br, I, F, H ou $-CR^1R^2OH$, $R^1$ et $R^2$ représentant chacun indépendamment hydrogène ou alkyle en $C_1$-$C_{14}$ ; et
- Z = Cl ou Br ;

(b) les dérivés de formule :

$$R^3CCl_3$$

où $R^3$ représente phényle ; benzyle ; benzoyle ; alcoxycarbonyle ; $R^4CO$ avec $R^4$ représentant alkyle en $C_1$-$C_{14}$ ou aryle ; alkyle ; mésityle ; trifluorométhyle; ou nitro ;

(c) les dérivés de formule :

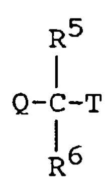

dans laquelle :

- Q représente un atome de chlore ou de brome ou un groupe acétate ou trifluoroacétate ou triflate ;
- $R^5$ représente un atome d'hydrogène, un groupe alkyle en $C_1$-$C_{14}$ ou un groupe aromatique, ou un groupe $-CH_2OH$ ;
- T représente un groupe

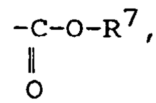

avec $R^7$ représentant hydrogène ou un groupe alkyle ou aromatique; un groupe CN ; un groupe

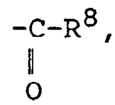

avec $R^8$ représentant alkyle en $C_1$-$C_{14}$, phényle ou isocyanate ; un groupe hydroxyle ; un groupe nitro ; un groupe amino substitué ou non ; un groupe alcoxy en $C_1$-$C_{14}$ ; un groupe $R^9CO$, avec $R^9$ représentant alkyle en $C_1$-$C_{14}$ ou aryle ;
- $R^6$ représente un groupe entrant dans les définitions de $R^5$ ou de Q ou un groupe fonctionnel tel qu'hydroxyle, nitro, amino substitué ou non, alcoxy en $C_1$-$C_{14}$, acyle, acide carboxylique, ester ;

(d) les composés lactones ou lactames halogénés en $\alpha$ ;

(e) les N-halosuccinimides et les N-halophtalimides ;

(f) les halogénures d'alkyl-sulfonyle et les halogénures d'arylène-sulfonyle ;

(g) les composés de formule :

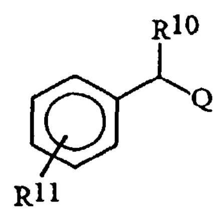

où :

- $R^{10}$ représente un atome d'hydrogène, un groupe alkyle en $C_1$-$C_{14}$ ou un groupe acide carboxylique, ester, nitrile ou cétone ;
- $R^{11}$ représente un atome d'hydrogène ou un groupe alkyle en $C_1$-$C_{14}$, hydroxyle, acyle, amine substituée ou non, nitro, alcoxy en $C_1$-$C_{14}$ ou sulfonate ; et
- Q a la signification donnée précédemment ;

(h) les composés de formule :

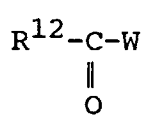

où :

- $R^{12}$ représente alkyle en $C_1$-$C_{14}$ ou aryle ;
- W représente halogène ou pseudo-halogène ;

(i) les composés de formule :

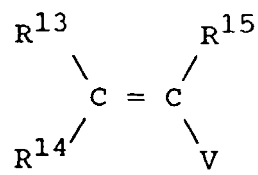

où :

- $R^{13}$, $R^{14}$ et $R^{15}$ représentent chacun indépendamment alkyle en $C_1$-$C_{14}$ ou aryle ; et
- V représente halogène, acétate, trifluoroacétate, triflate ;

(j) les halogénures aromatiques de formule :

Ar - U

où :

- Ar représente un groupement aromatique, tel que $C_6H_5$- pouvant être substitué en position ortho, méta ou para par un groupement électroattracteur ou électrodonneur ; et
- U représente un halogène.

**11.** Procédé conforme à l'une des revendications 1 à 9, caractérisé en ce que le composé générateur de radicaux est multifonctionnel et est constitué par au moins deux groupements générateurs de radicaux monofonctionnels issus des classes (c) à (j) définies à la revendication 10, reliés par une chaîne d'unités méthylène ou par un cycle benzénique, ou est choisi parmi les anhydrides acétiques comme l'anhydride d'acide chloroacétique et l'anhydride d'acide chlorodifluoroacétique, et les tri- ou tétrahalométhanes et les dérivés trichlorométhylés des classes (a) et (b) définies à la revendication 10.

**12.** Procédé conforme à la revendication 10, caractérisé en ce que le composé générateur de radicaux est un halogénure d'alkyle ou un halogénure d'alkyl- ou arylène-sulfonyle.

**13.** Procédé conforme à l'une quelconque des revendications 1 à 12, caractérisé en ce que le rapport molaire du ou des monomères sur le ou les composés générateurs de radicaux est de 1 - 100 000.

**14.** Procédé conforme à l'une des revendications 1 à 13, caractérisé en ce que le rapport molaire du métal M sur le (ou les) générateur(s) de radicaux est de 0,01 à 100.

**15.** Procédé conforme à l'une des revendications 8 à 14, caractérisé en ce que le rapport molaire L:M est compris entre 0,01 et 100, de préférence entre 1 et 5.

**16.** Procédé conforme à l'une quelconque des revendications 1 à 15, caractérisé en ce que le polymérisation ou copolymérisation est effectuée à une température de 0°C à 130°C.

**17.** Procédé conforme à l'une quelconque des revendications 1 à 16, caractérisé en ce que les monomères polymérisables ou copolymérisables comprennent au moins un monomère choisi parmi les méthacrylates, les acrylates, les dérivés vinylaromatiques, l'acétate de vinyle, le chlorure de vinyle, le fluorure de vinyle, et le fluorure de vinylidène.

**18.** Procédé conforme à la revendication 17, caractérisé en ce que le monomère est choisi dans le groupe comprenant le méthacrylate de méthyle, le méthacrylate d'éthyle, le méthacrylate de n-butyle, l'acrylate de n-butyle, l'acrylonitrile et le styrène.

**19.** Procédé conforme à l'une des revendications 1 à 18, caractérisé en ce qu'on conduit une copolymérisation séquencée en introduisant, dans le milieu de polymérisation dans lequel le premier monomère a été polymérisé, un second monomère le cas échéant avec un nouvel ajout de système d'amorçage.

**20.** Procédé conforme à l'une des revendications 1 à 19, caractérisé en ce que l'on conduit la (co)polymérisation en milieu aqueux, en présence ou non d'émulsifiants ; en présence d'un solvant organique ou d'un mélange de solvants organiques, tels que les hydrocarbures aromatiques, les hydrocarbures chlorés, les éthers cycliques, les esters et les cétones ; ou dans un mélange d'eau et d'au moins un solvant précité.

**21.** Procédé conforme à l'une des revendications 1 à 19, caractérisé en ce que l'on conduit la (co)polymérisation des (méth)acrylates d'alkyle et du styrène en présence du système d'amorçage halogénure d'alkyle/$RhCl(PPh_3)_3$ dans un mélange eau/solvant organique.

**Claims**

**1.** Process for the controlled radical polymerization or copolymerization of (meth)acrylic and/or vinyl and/or vinylidene and/or diene monomers, characterized in that at least one of the said monomers is polymerized or copolymerized in bulk, solution, emulsion or suspension, at a temperature which may be as low as 0°C, in the presence of an initiator system comprising:

- at least one non-peroxy radical-generator compound; and
- at least one catalyst consisting of a metal complex represented by formula (I) below:

$$MA_a(L)_n \qquad (I)$$

in which:

- M represents Rh, Co or Ir;
- A represents a halogen or a pseudohalogen;
- the groups L, which may be identical or different, each represent a ligand which may be a chiral ligand, which is chosen from cyclooctadiene, PRR'R", P(OR)(OR')(OR"), NRR'R", ORR', SRR', SeRR', AsRR'R", SbRR'R", each radical R, R' and R" independently representing an optionally substituted $C_1$-$C_{14}$ alkyl group or an optionally substituted aromatic group,
  it being possible for at least two of these ligands to be joined together by one or more divalent radicals;
- a is an integer such that $1 \leq a \leq 3$ ;
- n is an integer such that $1 \leq n \leq 5$,

and in the absence of activator.

**2.** Process according to Claim 1, characterized in that the metal M is Rh.

**3.** Process according to either of Claims 1 and 2, characterized in that A represents a halogen chosen from Cl, Br, F and I or a pseudohalogen chosen from CN, NCS, $NO_2$, $NO_3$, $N_3$, $OCOCF_3$, $OCOCH_3$ and $BF_4$.

**4.** Process according to one of Claims 1 to 3, characterized in that the groups L each represent a phosphine PRR'R", R, R' and R" each independently representing a $C_1$-$C_{14}$ alkyl group which may be substituted with $SO_3^-$, COOH, alkoxy, alkyl-S-, or an aromatic group which may be substituted with at least one group chosen in particular from halogen, alkyl, $CF_3$, alkoxy, $NO_2$ or $SO_3^-$, it being possible for at least two of these ligands to be connected to form a polyphosphine which may contain at least one hetero atom, such as N, P, S or O.

**5.** Process according to one of Claims 1 to 4, characterized in that the divalent radical connecting two ligands L is

an alkylene radical.

**6.** Process according to one of Claims 1 to 5, characterized in that the complex of formula (I) bears a cationic charge.

**7.** Process according to one of Claims 1 to 4, characterized in that the catalyst is RhCl(PRR'R"), R, R' and R" being as defined in Claim 1, and in particular $RhCl(PPh_3)_3$ or $RhBr(PPh_3)_3$.

**8.** Process according to one of Claims 1 to 7, characterized in that the complex of formula (I) is formed in situ in the reaction medium from a metal salt of formula $MA_b$ or $MA_b.xH_2O$, M and A being as defined in Claim 1, b being 2 or 3 and x being between 1 and 10, and ligands L as defined in Claim 1.

**9.** Process according to Claim 8, characterized in that the anhydrous metal salts $MA_b$ are chosen from $RhCl_3$, $RhI_3$, $CoCl_2$, $CoF_2$ and $CoF_3$, and the hydrated metal salts $MA_b.xH_2O$ are chosen from $RhBr_3.2H_2O$, $RhCl_3.xH_2O$ (x being between 1 and 10) and $CoCl_2.6H_2O$.

**10.** Process according to one of Claims 1 to 9, characterized in that the free-radical-generator compound is monofunctional and chosen from the following classes of compounds:

(a) derivatives of formula:

$$CYZ_3$$

where:

- $Y = Cl, Br, I, F, H$ or $-CR^1R^2OH$, $R^1$ and $R^2$ each independently representing hydrogen or $C_1$-$C_{14}$ alkyl; and
- Z = Cl or Br,

(b) derivatives of formula:

$$R^3CCl_3$$

where $R^3$ represents a phenyl group; benzyl group; benzoyl group; alkoxycarbonyl group; group $R^4CO$ with $R^4$ representing $C_1$-$C_{14}$ alkyl or aryl; alkyl group; mesityl group; trifluoromethyl group; or nitro,

(c) derivatives of formula:

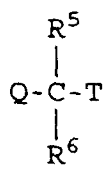

in which:

- Q represents a chlorine or bromine atom or an acetate or trifluoroacetate or triflate group;
- $R^5$ represents a hydrogen atom, a $C_1$-$C_{14}$ alkyl group or an aromatic $-CH_2OH$ group; or a $-CH_2OH$ group;
- T represents a group

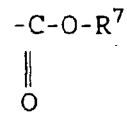 ,

with $R^7$ representing hydrogen or an alkyl or aromatic group; a CN group; a group

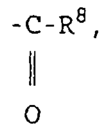

with $R^8$ representing $C_1$-$C_{14}$ alkyl, phenyl or isocyanate; a hydroxyl group; a nitro group; a substituted or unsubstituted amino group; a $C_1$-$C_{14}$ alkoxy group; a group $R^9CO$, with $R^9$ representing $C_1$-$C_{14}$ alkyl or aryl;

- $R^6$ represents a group falling within the definitions of $R^5$ or of Q or a functional group such as hydroxyl, nitro, substituted or unsubstituted amino, $C_1$-$C_{14}$ alkoxy, acyl, carboxylic acid or ester;

(d) α-halo lactone or lactam compounds;

(e) N-halosuccinimides, and N-halophthalimides;

(f) alkylsulphonyl halides and arylenesulphonyl halides;

(g) compounds of formula:

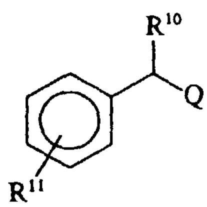

where:

- $R^{10}$ represents a hydrogen atom, a $C_1$-$C_{14}$ alkyl group or a carboxylic acid, ester, nitrile or ketone group;
- $R^{11}$ represents a hydrogen atom or a $C_1$-$C_{14}$ alkyl, hydroxyl, acyl, substituted or unsubstituted amine, nitro, $C_1$-$C_{14}$ alkoxy or sulphonate group; and
- Q has the meaning given above;

(h) compounds of formula:

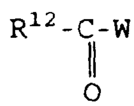

where:

- $R^{12}$ represents $C_1$-$C_{14}$ alkyl or aryl;
- W represents halogen or pseudohalogen;

(i) compounds of formula:

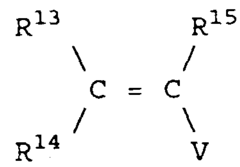

where:

- $R^{13}$, $R^{14}$ and $R^{15}$ each independently represent $C_1$-$C_{14}$ alkyl or aryl; and
- V represents halogen, acetate, trifluoroacetate or triflate;

(j) aromatic halides of formula:

$$Ar - U$$

where:

- Ar represents an aromatic group such as $C_6H_5$-which may be substituted in the ortho, meta or para position with an electron-withdrawing or electron-donating group; and
- U represents a halogen.

**11.** Process according to one of Claims 1 to 9, characterized in that the radical-generator compound is multifunctional and consists of at least two monofunctional radical-generator groups derived from classes(c) to (j) defined in Claim 10, connected by a chain of methylene units or by a benzene ring, or is chosen from acetic anhydrides such as chloroacetic anhydride and chlorodifluoroacetic anhydride, and tri- or tetrahalomethanes and trichloromethyl derivatives of classes (a) and (b) defined in Claim 10.

**12.** Process according to Claim 10, characterized in that the radical-generator compound is an alkyl halide or an alkylsulphonyl or arylenesulphonyl halide.

**13.** Process according to any one of Claims 1 to 12, characterized in that the molar ratio of the monomer or monomers to the radical-generator compound or compounds is from 1 to 100,000.

**14.** Process according to one of Claims 1 to 13, characterized in that the molar ratio of the metal M to the radical generator(s) is from 0.01 to 100.

**15.** Process according to one of Claims 8 to 14, characterized in that the molar ratio L:M is between 0.01 and 100, preferably between 1 and 5.

**16.** Process according to any one of Claims 1 to 15, characterized in that the polymerization or copolymerization is carried out at a temperature of from 0°C to 130°C.

**17.** Process according to any one of Claims 1 to 16, characterized in that the polymerizable or copolymerizable monomers comprise at least one monomer chosen from methacrylates, acrylates, vinylaromatic derivatives, vinyl acetate, vinyl chloride, vinyl fluoride and vinylidene fluoride.

**18.** Process according to Claim 17, characterized in that the monomer is chosen from the group comprising methyl methacrylate, ethyl methacrylate, n-butyl methacrylate, n-butyl acrylate, acrylonitrile and styrene.

**19.** Process according to one of Claims 1 to 18, characterized in that a block copolymerization is carried out by introducing, into the polymerization medium into which the first monomer has been polymerized, a second monomer, where appropriate with a further addition of initiator system.

**20.** Process according to one of Claims 1 to 19, characterized in that the (co)polymerization is carried out in aqueous medium, in the presence or absence of emulsifiers; in the presence of an organic solvent or a mixture of organic

solvents, such as aromatic hydrocarbons, chlorinated hydrocarbons, cyclic ethers, esters and ketones; or in a mixture of water and at least one abovementioned solvent.

**21.** Process according to one of Claims 1 to 19, characterized in that the (co)polymerization of alkyl (meth)acrylates and styrene is carried out in the presence of the alkyl halide/$RhCl(PPh_3)_3$ initiator system in a water/organic solvent mixture.

## Patentansprüche

**1.** Verfahren zur kontrollierten radikalischen Polymerisation oder Copolymerisation von (Meth)acryl- und/oder Vinyl- und/oder Vinyliden- und/oder Dienmonomeren, dadurch gekennzeichnet, daß man in Masse, Lösung, Emulsion oder Suspension und in Abwesenheit eines Aktivators bei einer Temperatur abwärts bis zu 0 °C mindestens eines dieser Monomeren polymerisiert oder copolymerisiert, in Gegenwart eines Startersystems, enthaltend:

- mindestens eine nicht-peroxidische, Radikale erzeugende Verbindung und
- mindestens einen Katalysator, der aus einem Metallkomplex besteht, der durch folgende Formel (I) dargestellt wird:

$$MA_a(L)_n \qquad (I)$$

in der:

- M steht für Rh, Co, oder Ir;
- A steht für ein Halogen oder ein pseudo-Halogen;
- die L, gleich oder verschieden, jeweils für einen Liganden stehen, der ein chiraler Ligand sein kann und ausgewählt ist aus Cyclooctadien, PRR'R", P(OR) (OR') (OR"), NRR'R", ORR', SRR', SeRR', AsRR'R", SbRR'R", wobei jedes R, R', R" unabhängig für eine gegebenenfalls substituierte $C_1$-$C_{14}$Alkylgruppe oder eine gegebenenfalls substituierte aromatische Gruppe steht, wobei mindestens zwei dieser Liganden untereinander durch einen oder mehrere zweiwertige Reste verbunden sein können;
- a eine ganze Zahl wie $1 \leq a \leq 3$ ist;
- n eine ganze Zahl wie $1 \leq n \leq 5$ ist.

**2.** Verfahren nach Anspruch 1, dadurch gekennzeichnet, daß das Metall M Rh ist.

**3.** Verfahren nach einem der Ansprüche 1 bis 2, dadurch gekennzeichnet, daß A für Halogen steht, ausgewählt aus Cl, Br, F und I oder einem Pseudohalogen, ausgewählt aus CN, NCS, $NO_2$, $NO_3$, $N_3$, $OCOCF_3$, $OCOCH_3$ und $BF_4$.

**4.** Verfahren nach einem der Ansprüche 1 bis 3, dadurch gekennzeichnet, daß L für ein Phosphin PRR'R" steht, wobei R, R', R" jeweils unabhängig voneinander für eine $C_1$-$C_{14}$-Alkylgruppe stehen, die gegebenenfalls durch $SO_3^-$, COOH, Alkoxy, Alkyl-S- oder eine aromatische Gruppe substituiert ist, die durch eine Gruppierung substituiert sein kann, die insbesondere ausgewählt ist aus Halogen, Alkyl, $CF_3$, Alkoxy, $NO_2$, $SO_3^-$, wobei mindestens zwei dieser Liganden ihrerseits verbunden sein können, um ein Polyphosphin zu bilden, das mindestens ein Heteroatom wie N, P, S und O enthalten kann.

**5.** Verfahren nach einem der Ansprüche 1 bis 4, dadurch gekennzeichnet, daß der die beiden Liganden L verbindende bivalente Rest ein Alkylenrest ist.

**6.** Verfahren nach einem der Ansprüche 1 bis 5, dadurch gekennzeichnet, daß der Komplex der Formel (I) eine kationische Ladung trägt.

**7.** Verfahren nach einem der Ansprüche 1 bis 4, dadurch gekennzeichnet, daß der Katalysator RhCl(PRR'R") ist, wobei R, R', R" wie in Anspruch 1 definiert sind und insbesondere $RhCl(PPh_3)_3$ oder $RhBr(PPh_3)_3$.

**8.** Verfahren nach einem der Ansprüche 1 bis 7, dadurch gekennzeichnet, daß der Komplex (I) aus einem Metallsalz der Formel $MA_b$ oder $MA_b \bullet xH_2O$ und den im Anspruch 1 definierten Liganden in situ im Reaktionsgemisch gebildet

worden ist, wobei M und A wie in Anspruch 1 definiert sind, b gleich 2 oder 3 ist und x zwischen 1 und 10 liegt.

**9.** Verfahren nach Anspruch 8, dadurch gekennzeichnet, daß man die wasserfreien Metallsalze $MA_b$ unter $RhCl_3$, $RhI_3$, $CoCl_2$, $COF_2$ und $COF_3$ und die hydratisierten Metallsalze $MA_b \bullet xH_2O$ unter $RhBr_3 \bullet 2H_2O$, $RhCl_3 \bullet xH_2O$ (x zwischen 1 und 10) und $CoCl_2 \bullet 6H_2O$ auswählt.

**10.** Verfahren nach einem der Ansprüche 1 bis 9, dadurch gekennzeichnet, daß die freie Radikale bildende Verbindung monofunktionell ist und ausgewählt aus folgenden Verbindungsklassen:

(a) den Derivaten der Formel:

$$CYZ_3$$

in der

- Y=Cl, Br, I, F, H oder $-CR^1R^2OH$, wobei $R^1$ und $R^2$ jeweils unabhängig voneinander für Wasserstoff oder $C_1$-$C_{14}$-Alkyl stehen; und
- Z=Cl oder Br;

(b) den Derivaten der Formel

$$R^3CCl_3$$

in der $R^3$ steht für Phenyl; Benzyl; Benzoyl; Alkoxycarbonyl; $R_4CO$ mit $R^4$ für $C_1$-$C_{14}$-Alkyl oder Aryl; Alkyl; Mesityl, Trifluormethyl, oder Nitro;
(c) den Derivaten der Formel

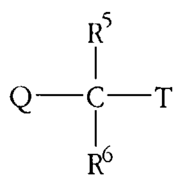

in der steht

- Q für ein Chlor- oder Bromatom oder eine Acetat- oder Trifluoracetat-oder Triflatgruppe;
- $R^5$ für ein Wasserstoffatom, eine $C_1$-$C_{14}$-Alkylgruppe oder eine aromatische Gruppe oder eine Gruppe $-CH_2OH$;
- T für eine ($-CO-O-R^7$)-Gruppe, in der $R^7$ steht für Wasserstoff oder eine Alkyl- oder aromatische Gruppe; eine CN-Gruppe; eine ($-CO-R^8$)-Gruppe, in der $R^8$ für $C_1$-$C_{14}$-Alkyl, Phenyl oder Isocyanat steht; eine Hydroxylgruppe; eine Nitrogruppe; eine gegebenenfalls substituierte Aminogruppe; eine $C_1$-$C_{14}$-Alkoxygruppe; eine $R^9CO$-Gruppe, in der $R^9$ für $C_1$-$C_{14}$-Alkyl oder Aryl steht;
- $R^6$ für eine unter die Definition von R oder Q fallende Gruppe oder eine funktionelle Gruppe wie Hydroxyl, Nitro, gegebenenfalls substituiertes Amino, $C_1$-$C_{14}$-Alkoxy, Acyl, Carboxy, Ester;

(d) den in $\alpha$-Stellung halogenierten Lactonen oder Lactamen;
(e) den N-Halosuccinimiden und den N-Halophthalimiden;
(f) den Alkylsulfonyl- und Arylsulfonylhalogeniden;
(g) den Verbindungen der Formel:

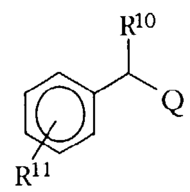

in der

- $R^{10}$ steht für ein Wasserstoffatom, eine $C_1$-$C_{14}$-Alkyl- oder Carboxy-, Ester-, Nitril- oder Ketogruppe;
- $R^{11}$ steht für ein Wasserstoffatom oder eine $C_1$-$C_{14}$-Alkyl-, Hydroxyl-, Acyl-, gegebenenfalls substituierte Amino-, Nitro-, $C_1$-$C_{14}$-Alkoxy- oder Sulfonatgruppe; und
- Q die vorstehend angegebene Bedeutung besitzt;

(h) den Verbindungen der Formel

$$R^{12}\text{-CO-W}$$

- $R^{12}$ steht für $C_1$-$C_{14}$-Alkyl oder Aryl;
- W steht für Halogen oder Pseudohalogen;

(i) den Verbindungen der Formel

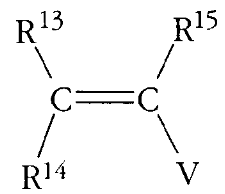

in der stehen:

- $R^{13}$, $R^{14}$ und $R^{15}$ jeweils unabhängig für $C_1$-$C_{14}$-Alkyl, Aryl; und
- V für Halogen, Acetat, Trifluoracetat oder Triflat;

(j) die aromatischen Halogenide der Formel

$$\text{Ar-U}$$

in der

- Ar für eine aromatische Gruppe steht wie $C_6H_5$-, die in ortho-, meta-oder para-Stellung durch eine Elektronen anziehende oder abgehende Gruppe substituiert sein kann; und
- U für Halogen steht.

**11.** Verfahren nach einem der Ansprüche 1 bis 9, dadurch gekennzeichnet, daß die Radikale bildende Verbindung multifunktionell ist und aus mindestens zwei Gruppierungen Radikale bildender monofunktioneller Verbindungen besteht, die aus den in Anspruch 10 definierten Klassen (c) bis (j) hervorgegangen und durch eine Kette von Methyleneinheiten oder einen benzolischen Ring verknüpft sind oder ausgewählt ist unter den Anhydriden der Essigsäuren wie Chloressigsäureanhydrid, Chlordifluoressigsäureanhydrid und den Tri- oder Tetrahalomethanen und den trichlormethylierten Abkömmlingen der Klassen (a) und (b) wie sie in Anspruch 10 definiert sind.

**12.** Verfahren nach Anspruch 10, dadurch gekennzeichnet, daß der Radikalbildner ein Alkylhalogenid oder ein Halogenid von Alkyl- oder Arylsulfoxid ist.

**13.** Verfahren nach einem der Ansprüche 1 bis 12, dadurch gekennzeichnet, daß das Molverhältnis des oder der Monomeren zu der oder den Radikale bildenden Verbindungen 1 - 100.000 ist.

**14.** Verfahren nach einem der Ansprüche 1 bis 13, dadurch gekennzeichnet, daß das Molverhältnis des Metalls M zu der oder den Radikale bildenden Verbindungen 0,01 bis 100 ist.

**15.** Verfahren nach einem der Ansprüche 8 bis 14, dadurch gekennzeichnet, daß das Molverhältnis L : M zwischen 0,01 und 100, vorzugsweise zwischen 1 und 5 ist.

**16.** Verfahren nach einem cler Ansprüche 1 bis 15, dadurch gekennzeichnet, daß die Polymerisation oder Copolymerisation bei einer Temperatur von 0 °C bis 130 °C ausgeführt wird.

**17.** Verfahren nach einem der Ansprüche 1 bis 16, dadurch gekennzeichnet, daß die polymerisierbaren oder copolymerisierbaren Monomeren mindestens ein Monomer umfassen, das ausgewählt ist unter den Methacrylaten, Acrylaten, vinylaromatischen Abkömmlingen, Vinylacetat, Vinylchlorid, Vinylfluorid und Vinylidenfluorid.

**18.** Verfahren nach Anspruch 17, dadurch gekennzeichnet, daß das Monomer ausgewählt ist aus der Gruppe, die Methylmethacrylat, Ethylmethacrylat, n-Butylmethacrylat, n-Butylacrylat, Acrylnitril und Styrol umfaßt.

**19.** Verfahren nach einem der Ansprüche 1 bis 18, dadurch gekennzeichnet, daß man eine Blockcopolymerisation durchführt, indem man einem Polymerisationsgemisch, in dem das erste Monomer polymerisiert worden ist, ein weiteres Monomer zusetzt, gegebenenfalls mit erneuter Zugabe eines Startersystems.

**20.** Verfahren nach einem der Ansprüche 1 bis 19, dadurch gekennzeichnet, daß man die (Co)polymerisation in wäßriger Umgebung in An- und Abwesenheit von Emulgatoren; in Gegenwart eines organischen Lösungsmittels oder einer Mischung organischer Lösungsmittel wie aromatischen Kohlenwasserstoffen, chlorierten Kohlenwasserstoffen, cyclischen Ethern, Estern oder Ketonen; oder in einer Mischung von Wasser und wenigstens einem der vorgenannten Lösungsmittel vornimmt.

**21.** Verfahren nach einem der Ansprüche 1 bis 19, dadurch gekennzeichnet, daß man die (Co)polymerisation der Alkyl (meth)acrylate und des Styrols in Gegenwart eines Startersystems Alkylhalogenid/$RhCl(PPh_3)_3$ in einer Wasser/Lösungsmittel-Mischung vornimmt.